(12) **EUROPÄISCHE PATENTSCHRIFT**

(45) Veröffentlichungstag und Bekanntmachung des Hinweises auf die Patenterteilung:
**10.07.2024   Patentblatt 2024/28**

(21) Anmeldenummer: **19786629.6**

(22) Anmeldetag: **18.10.2019**

(51) Internationale Patentklassifikation (IPC):
**G06F 3/02** *(2006.01)*     **G06F 3/03** *(2006.01)*
**G06F 3/0346** *(2013.01)*     **G06F 3/01** *(2006.01)*
**G02B 27/01** *(2006.01)*     **G06N 3/04** *(2023.01)*
**G06N 3/08** *(2023.01)*

(52) Gemeinsame Patentklassifikation (CPC):
**G06F 3/0346; G06F 3/011; G06F 3/0304;**
G06N 3/08

(86) Internationale Anmeldenummer:
**PCT/EP2019/078379**

(87) Internationale Veröffentlichungsnummer:
**WO 2020/079227 (23.04.2020 Gazette 2020/17)**

(54) **VERFAHREN UND VORRICHTUNG ZUM TRAINIEREN EINES KÜNSTLICHEN NEURONALEN NETZWERKS SOWIE VERFAHREN ZUR BESTIMMUNG EINER POSITION EINES EINGABEGERÄTS**

METHOD AND DEVICE FOR TRAINING AN ARTIFICIAL NEURAL NETWORK AND METHOD FOR POSITION TRACKING OF AN INPUT DEVICE

PROCÉDÉ ET DISPOSITIF D'ENTRAINEMENT D'UN RÉSEAU DE NEURONES ARTIFICIELLES ET PROCÉDÉ DE DÉTERMINATION DE LA POSITION D'UN DISPOSITIF D'ENTRÉE DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2018   PCT/EP2018/078641**

(43) Veröffentlichungstag der Anmeldung:
**25.08.2021   Patentblatt 2021/34**

(60) Teilanmeldung:
**24151234.2 / 4 328 803**

(73) Patentinhaber: **AR Technology GmbH**
**6330 Kufstein (AT)**

(72) Erfinder:
 • **STRENG, Gerald**
 **6473 Wenns (AT)**
 • **STÄRZ, Ronald**
 **6073 Sistrans (AT)**
 • **HASPINGER, Florian**
 **85452 Moosinning (DE)**
 • **WERLBERGER, Alexander**
 **85452 Moosinning (DE)**

 • **LANDGRAF, Philipp**
 **83026 Rosenheim (DE)**

(74) Vertreter: **Prinz & Partner mbB**
**Patent- und Rechtsanwälte**
**Rundfunkplatz 2**
**80335 München (DE)**

(56) Entgegenhaltungen:
 • **JORIS GUERIN ET AL: "Automatic Construction of Real-World Datasets for 3D Object Localization Using Two Cameras", PREPRINT FOR IECON 2018, 44TH ANNUAL CONFERENCE OF THE IEEE INDUSTRIAL ELECTRONICS SOCIETY, 11 September 2018 (2018-09-11), arXiv:1707.02978, pages 3655 - 3658, XP055653412, Retrieved from the Internet <URL:https://arxiv.org/pdf/1707.02978.pdf> [retrieved on 20191218], DOI: 10.1109/IECON.2018.8591347**

EP 3 867 736 B1

**(Forts. nächste Seite)**

- **ANASTASIA IOANNIDOU ET AL: "Deep Learning Advances in Computer Vision with 3D Data", ACM COMPUTING SURVEYS, ACM, NEW YORK, NY, US, US, vol. 50, no. 2, 6 April 2017 (2017-04-06), pages 1 - 38, XP058327051, ISSN: 0360-0300, DOI: 10.1145/3042064**
- **SAMIRA POUYANFAR ET AL: "A Survey on Deep Learning : Algorithms, Techniques, and Applications", ACM COMPUTING SURVEYS., vol. 51, no. 5, 18 September 2018 (2018-09-18), US, pages 1 - 36, XP055653910, ISSN: 0360-0300, DOI: 10.1145/3234150**

**Beschreibung**

Die Erfindung betrifft ein Verfahren zum Trainieren eines künstlichen neuronalen Netzwerks zur Positionsbestimmung eines Eingabegeräts. Die Erfindung betrifft ferner eine Vorrichtung zum Trainieren eines künstlichen neuronalen Netzwerks zur Positionsbestimmung eines Eingabegeräts, ein Verfahren zu Bestimmung einer Position eines Eingabegeräts sowie ein System mit einer Empfangseinheit.

Eingabevorrichtungen für Computer im Stile eines Point-and-Click-Device sind aus dem Stand der Technik bekannt. Ein Vertreter von Eingabevorrichtungen für zweidimensionale Anwendungen ist z.B. eine Computermaus, mit welcher man am Bildschirm eines Computers auf eine Abbildung zeigen kann und mit dem Drücken des Tasters ein Signal an ein Endgerät abgibt.

Mixed-Reality-Vorrichtungen, insbesondere Augmented-Reality-Vorrichtungen, bei denen ein Benutzer in einer Kombination aus virtuellen und realen Bildern agiert, bedürfen Eingabevorrichtungen, die im dreidimensionalen Raum verwendet werden können. Bei Mixed-Reality-Vorrichtungen, insbesondere bei Augmented-Reality-Vorrichtungen ist ein Hauptproblem, dass die Eingabevorrichtung nicht auf einer starren Unterlage bewegt wird, sondern im 3D-Raum.

In DE 101 24 834 C2 ist eine solche Eingabevorrichtung gezeigt, bei welcher der Benutzer ein Bildprojektionssystem vor seinen Augen trägt. Generell herrscht bei solchen aus dem Stand der Technik bekannten Mixed Reality Vorrichtungen das Problem, dass eine Genauigkeit der ermittelten Position der Eingabevorrichtung relativ zum Bildprojektionssystem nicht ausreichend ist, um dem Nutzer eine intuitive Interaktion mit den virtuellen Bildern zu erlauben. Ein nicht unerheblicher Versatz zwischen Positionen der wahrgenommenen, realen Umgebung und virtuellen, durch das Bildprojektionssystem erzeugten Objekten ist vorhanden, sodass Tätigkeiten wie Greifen oder Zeichnen unnatürlich wirken.

"Automatic construction of real-world datasets for 3D object localization using two cameras", arXiv: 1707.02978v3 vom 11. September 2018 offenbart ein Verfahren zur Erstellung eines Datensets zur Positionsbestimmung eines Objekts mittels Stereovision. Mittels eines Industrieroboters wird ein großes Dataset mit Positionslabeln erstellt, wobei der Industrieroboter ein Objekt an verschiedene Orte verfährt, und wobei von dem Objekt jeweils zwei Bilder aufgenommen werden. Als Eingangsgrößen für ein künstliches neuronales Netzwerk werden die von zwei Kameras erzeugten Bilder verwendet.

"Deep Learning Advances in Computer Vision with 3D Data: A Survey", ACM Comput. Surv. 50, 2, Article 20 vom April 2017 offenbart technische Hintergründe zur Verarbeitung von dreidimensionalen Bilddaten unter Verwendung von Deep Learning Methoden.

"A Survey on Deep Learning: Algorithms, Techniques, and Applications", ACM Comput. Surv. 51, 5, Article 92 vom September 2018 offenbart technische Hintergründe zur Verarbeitung von Audiodaten, Bilddaten und Textdaten unter Verwendung von Deep Learning Methoden.

Aufgabe der Erfindung ist es daher, ein Verfahren zur Bestimmung einer Position eines Objekts, insbesondere eines Eingabegeräts bereitzustellen, bei dem die Genauigkeit der Positionsermittlung gegenüber dem Stand der Technik verbessert ist.

Die Aufgabe wird erfindungsgemäß gelöst durch ein Verfahren zum Trainieren eines künstlichen neuronalen Netzwerks zur Positionsbestimmung eines Objekts, insbesondere der Position eines lichtemittierenden Elements und/oder einer Spitze eines Eingabegerätes. Das Verfahren umfasst die folgenden Schritte:

i) Eine beliebige Position im Arbeitsraum eines Roboters, insbesondere eines Industrieroboters, wird angefahren, wobei am Roboter ein lichtemittierendes Element angebracht ist;

ii) Zumindest zwei Bildern vom lichtemittierenden Element werden mit zumindest zwei Kameras aufgenommen;

iii) Koordinaten des lichtemittierenden Elements werden ermittelt, wobei Koordinaten der durch das lichtemittierende Element beleuchteten Pixel der Sensoren der Kameras ermittelt werden; und

iv) die ermittelten Koordinaten werden als Inputparameter für die Input-Schicht des künstlichen neuronalen Netzwerks verwendet.

Sensoren der Kameras sind jeweils in wenigstens zwei Koordinatenbereiche eingeteilt, wobei die ermittelten Koordinaten einem der Koordinatenbereiche zugewiesen werden. Das künstliche neuronale Netzwerk weist wenigstens zwei Subnetzwerke auf, wobei den Koordinatenbereichen jeweils ein Subnetzwerk zugeordnet ist

Das erfindungsgemäße Verfahren basiert auf der Erkenntnis, dass bei Verwendung eines künstlichen neuronalen Netzes zur Positionserkennung bei Verwendung zweier Kameras auch die Position eines einzelnen Objekts bzw. eines einzelnen lichtemittierenden Elements zuverlässig ermittelt werden kann. Das entsprechende künstliche neuronale Netzwerk muss jedoch natürlich zuerst für den Einsatz trainiert werden, was mittels des erfindungsgemäßen Verfahrens möglich ist.

Bei Verwendung des so trainierten künstlichen neuronalen Netzwerks zur Positionsbestimmung in einer Augmented-Reality-Vorrichtung sind die eingangs genannten Probleme im Stand der Technik beseitigt, da sich herausgestellt hat, dass das künstliche neuronale Netzwerk die Position des lichtemittierenden Elements bzw. des Eingabegeräts präzise und zuverlässig selbst dann ermitteln kann, wenn nur ein einzelnes lichtemittierendes Element vorgesehen ist.

Beim Ermitteln der Koordinaten des lichtemittierenden Elements werden Koordinaten der durch das lichtemittierende Element beleuchteten Pixel der Sensoren der Kameras ermittelt, insbesondere von CCD-Sensoren der Kameras. Anders ausgedrückt können also die beleuchteten Pixel selbst bzw. deren Ausgangssignal bereits als Input für das künstliche neuronale Netzwerk dienen. Es ist also insbesondere nicht notwendig, zunächst mittels Bildverarbeitung ein Abbild des Bereichs vor der Kamera zu erzeugen und dann mittels Bilderkennung die Koordinaten des lichtemittierenden Elements in diesem Abbild zu ermitteln. Dadurch wird Rechenzeit eingespart und die Geschwindigkeit des Trainings erhöht.

Unter "Mixed-Reality" und "Augmented-Realtiy" wird im Allgemeinen und auch im Rahmen dieser Erfindung verstanden, dass ein Benutzer seine Umgebung direkt mittels seiner Augen wahrnimmt, dem Benutzer jedoch künstliche Inhalte in sein Blickfeld (überlagernd) eingeblendet werden. Im Gegensatz hierzu steht "Virtual-Realtiy", bei der das Sichtfeld des Benutzers vollständig durch ein Ausgabegerät abgedeckt ist, sodass der Benutzer seine Umgebung optisch nicht oder nur indirekt als Wiedergabe auf dem Ausgabegerät wahrnehmen kann.

Insbesondere handelt es sich bei dem eingesetzten künstlichen neuronalen Netzwerk um ein "fully connected neuronal network", bei dem die Neuronen wenigstens einer, insbesondere aller Schichten jeweils mit allen Neuronen der folgenden Schicht verbunden sind.

Dabei eignet sich das oben beschriebene Verfahren im Prinzip zum Training für eine Bestimmung der Position beliebiger Objekte. Beispielsweise kann das künstliche neuronale Netzwerk mittels des Trainingsverfahrens dazu trainiert werden, die Position des lichtemittierenden Elements, des Eingabegeräts, eines Werkzeugs, oder jedes anderen beliebigen, optisch erfassbaren Objekts zu bestimmen.

Das Eingabegerät ist beispielsweise ein Stylus, also ein stiftförmiges Objekt.

Gegenstand der Erfindung ist aber im Speziellen die Anwendung des erfindungsgemäßen Trainingsverfahrens im Bereich der Augmented-Reality-Vorrichtungen, bei denen mittels des zu trainierenden künstlichen neuronalen Netzwerks die Position eines Eingabegeräts ermittelt werden soll.

Grundsätzlich ist dabei und im Folgenden unter einem "Roboter" eine verstellbare mechanische und/oder elektrische Einrichtung zu verstehen, welche dazu ausgebildet ist, das Objekt bzw. das lichtemittierende Element an eine gewünschte Position im Raum zu verfahren und/oder das lichtemittierende Element an der gewünschten Position einzuschalten.

Alternativ zur Ausgestaltung als Industrieroboter kann der Roboter beispielsweise auch als bewegliche Wand ausgebildet sein, die in wenigstens einer Richtung bewegbar ist und eine Vielzahl von selektiv ansteuerbaren lichtemittierenden Elementen aufweist. Die lichtemittierenden Elemente können als Matrix angeordnet sein.

Es ist vorgesehen, dass Sensoren der Kameras jeweils in wenigstens zwei Koordinatenbereiche eingeteilt sind, wobei die ermittelten Koordinaten einem der Koordinatenbereiche zugewiesen werden, insbesondere wobei die Koordinatenbereiche paarweise disjunkt sind. Es hat sich herausgestellt, dass sowohl die benötigte Trainingszeit als auch die Zeit, die das künstliche neuronale Netzwerk im Einsatz zur Positionserkennung wesentlich reduziert werden kann, wenn das Blickfeld der Kameras in mehrere Abschnitte eingeteilt wird. Genauer gesagt werden die Pixel der Sensoren der Kameras und/oder die entsprechenden Bildpixel in mehrere Koordinatenbereiche aufgeteilt.

Die Einteilung in die Koordinatenbereiche kann prinzipiell beliebig erfolgen. Jedoch hat sich eine Einteilung in drei jeweils vertikal verlaufende Koordinatenstreifen als besonders vorteilhaft erwiesen.

Dabei weist das künstliche neuronale Netzwerk wenigstens zwei Subnetzwerke auf, wobei den Koordinatenbereichen jeweils ein Subnetzwerk zugeordnet ist. Anders ausgedrückt umfasst das künstliche neuronale Netzwerk mehrere Teilnetzwerke (die genannten Subnetzwerke) welche jeweils nur einem Teilbereich des Blickfelds der Kamera zugeordnet, d.h. für dieses "zuständig" sind. Diese Subnetzwerke bilden jeweils eigenständige neuronale Netzwerke.

Dementsprechend wird beim Training des künstlichen neuronalen Netzwerks nach dem Ermitteln der Koordinaten des lichtemittierenden Elements zunächst ermittelt, in welchem Koordinatenbereich sich das Objekt bzw. das lichtemittierende Element bzw. befindet. Dies ist jedoch eine einfache Operation, die nur wenig Rechenzeit bzw. Rechenressourcen beansprucht.

Die ermittelten Koordinaten werden dann an die Input-Schicht des entsprechenden zugeordneten bzw. "zuständigen" Subnetzwerks übergeben und von diesem Subnetzwerk verarbeitet.

Anders ausgedrückt kann vorgesehen sein, dass das künstliche neuronale Netzwerk wenigstens zwei Subnetzwerke aufweist und dass Sensoren der Kameras jeweils in wenigstens zwei Koordinatenbereiche eingeteilt sind, die jeweils einem der Subnetzwerke zugeordnet sind, wobei die ermittelten Koordinaten einem der Koordinatenbereiche zugewiesen und dem entsprechenden Koordinatenbereich zugeordneten Subnetzwerk zur weiteren Auswertung übergeben werden.

Gemäß einem Aspekt der Erfindung umfasst das Verfahren die folgenden weiteren Schritte:

v) Ermitteln einer Kostenfunktion; und

vi) Extremieren, insbesondere Minimieren der Kostenfunktion.

Die Kostenfunktion umfasst dabei Ausgangsgrößen des künstlichen neuronalen Netzes, also insbesondere eine vom künstlichen neuronalen Netz ermittelte Position des Objekts. Ferner umfasst die Kostenfunktion Trainingsdaten, welche die Sollwerte enthalten, also die tatsächlichen Werte für die Ausgangsgrößen des künstlichen neuronalen Netzwerks. Insbesondere enthält die Kostenfunktion eine Abweichung der Ausgangsgrößen von den entsprechenden Sollwerten, also anders ausgedrückt einen Fehler.

Um das künstliche neuronale Netzwerk zu trainieren, wird die Kostenfunktion, je nach Definition, minimiert oder maximiert, wobei diejenige Definition der Kostenfunktion die intuitive Definition ist, bei der die Kosten mit zunehmendem Fehler steigen.

Ohne Beschränkung der Allgemeinheit wird zur Vereinfachung im Folgenden davon ausgegangen, dass die Kostenfunktion minimiert wird.

Alternativ oder zusätzlich können die Kameras oder genauer gesagt die Sensoren der Kameras dazu ausgebildet sein, automatisch einen Mittelpunkt der beleuchteten Pixel der Sensoren zu ermitteln. In diesem Fall werden also die Koordinaten des Mittelpunkts der beleuchteten Pixel ermittelt und dienen als Input für das künstliche neuronale Netzwerk. Dementsprechend wird nur ein Koordinatenpaar, nämlich die Koordinaten des Mittelpunkts der beleuchteten Pixel, an das künstliche neuronale Netzwerk übergeben.

Vorzugsweise werden die oben beschriebenen Schritte i) bis iv), insbesondere die oben beschriebenen Schritte i) bis vi) für verschiedene beliebige Positionen im Arbeitsraum des Roboters wiederholt. Die oben beschriebenen Trainingsschritte werden also für mehrere verschiedene Positionen des Objekts bzw. des lichtemittierenden Elements im Blickfeld der Kameras wiederholt, sodass das künstliche neuronale Netzwerk über das gesamte Blickfeld der Kameras hinweg trainiert wird.

Insbesondere wird die tatsächliche Position, an welcher das lichtemittierende Element bzw. das Eingabegerät positioniert wird, per Zufallsgenerator ermittelt. Dabei kann die Wahrscheinlichkeit für die Positionierung an einer bestimmten Position über den Arbeitsbereich des Roboters hinweg im Wesentlichen gleichverteilt sein, insbesondere gleichverteilt. Insbesondere verhindert die Verwendung eines Zufallsgenerators, dass sich das künstliche neuronale Netzwerk zu sehr an einen vorgegebenen Pfad des Roboters durch den Arbeitsbereich anpasst, also sozusagen den Pfad des Roboters durch seinen Arbeitsraum "auswendig lernt".

In einer weiteren Ausgestaltung der Erfindung werden Gewichtungsfaktoren des künstlichen neuronalen Netzwerks angepasst, um das künstliche neuronale Netzwerk zu trainieren und/oder die Kostenfunktion zu extremieren. Insbesondere werden dabei Gewichtungsfaktoren einzelner Neuronen des künstlichen neuronalen Netzwerks angepasst.

Ein weiterer Aspekt der Erfindung sieht vor, dass mittels des künstlichen neuronalen Netzes basierend auf den ermittelten Koordinaten des Objekts, insbesondere des lichtemittierenden Elements, die Position des Objekts, insbesondere die Position des lichtemittierenden Elements und/oder die Position der Spitze des Eingabegerätes ermittelt wird, insbesondere eine dreidimensionale räumliche Position des lichtemittierenden Elements und/oder der Spitze. Die Ausgabegröße des künstlichen neuronalen Netzwerks sind also die räumlichen Koordinaten der Position des Objekts bzw. des lichtemittierenden Elements.

Vorzugsweise umfasst die Kostenfunktion die mittels des künstlichen neuronalen Netzwerks ermittelte Position des Objekts sowie einen dazugehörigen Trainingsdatensatz, wobei der Trainingsdatensatz eine tatsächliche Position des Objekts umfasst.

Die tatsächliche Position des Objekts, insbesondere des lichtemittierenden Elements bzw. des Eingabegeräts ist präzise bekannt, da der Roboter das Objekt präzise hin zu einer gewünschten Position bringt, die aus den entsprechenden Steuerbefehlen für den Roboter bekannt ist.

Weiter bevorzugt umfasst die Kostenfunktion einen Fehler, wobei der Fehler eine Abweichung zwischen der ermittelten Position und der tatsächlichen Position ist. Beim Minimieren der Kostenfunktion wird der Fehler, also die Abweichung zwischen der ermittelten Position und der tatsächlichen Position minimiert, sodass das künstliche neuronale Netzwerk dazu trainiert wird, die Position korrekt zu ermitteln.

In einer Ausgestaltung der Erfindung wird zum Extremieren der Kostenfunktion der Fehler minimiert, insbesondere wobei der mittlere Fehler über alle Trainingsdaten minimiert wird. Dabei kann bei jeder Wiederholung der oben beschriebenen Trainingsschritte (für jede angefahrene Position im Arbeitsraum des Roboters) ein kombinierter Fehler aller Trainingsschritte minimiert werden, anstatt nur den individuellen Fehler bzw. die Kostenfunktion in der jeweiligen Wiederholung zu minimieren.

Gemäß einer weiteren Ausgestaltung der Erfindung wird beim Ermitteln der Position des Eingabegeräts ein vordefinierter Anteil der Neuronen des künstlichen Neuronalen Netzwerks ausgeschaltet. Beispielsweise werden in jedem Trainingsschritt 5% bis 45% der Neuronen ausgeschaltet, vorzugsweise 10% bis 35%. Dies verringert die Gefahr einer Überanpassung des künstlichen neuronalen Netzwerks an die Trainingsdaten wesentlich.

Weiter bevorzugt werden die oben beschriebenen Schritte i) bis vi) für wenigstens zwei verschiedene Einteilungen der Koordinatenbereiche durchgeführt und/oder die oben beschriebenen Schritte i) bis vi) werden für jedes Subnetzwerk getrennt durchgeführt, insbesondere wobei eine separate Kostenfunktion für jedes Subnetzwerk ermittelt und extremiert wird.

Es können also dann, wenn sich die ermittelten Koordinaten des lichtemittierenden Elements in einem vordefinierten Bereich um eine Koordinatenbereichsgrenze befinden, die Trainingsschritte iii) bis vi) zweimal ausgeführt werden, und zwar jeweils einmal mittels der beiden Subnetzwerke, die den benachbarten Koordinatenbereichen zugeordnet sind. Dies entspricht einer Durchführung der Schritte iii) bis vi) für zwei verschiedene Einteilungen der Koordinatenbereiche.

Eine Abweichung zwischen den ermittelten Positionen der beiden Subnetzwerke kann dann in die Kostenfunktion einfließen, sodass bei einer Minimierung der Kostenfunktion automatisch auch ein Springen der ermittelten Position im Bereich der Koordinatenbereichsgrenze vermindert oder sogar verhindert wird.

Alternativ erfolgt das Training der Subnetzwerke unabhängig voneinander.

Die Aufgabe wird ferner erfindungsgemäß gelöst durch ein Verfahren zur Bestimmung einer Position eines Objekts, insbesondere der Position von lichtemittierenden Elementen und/oder der Position der Spitze eines Eingabegerätes, mittels eines trainierten künstlichen neuronalen Netzwerks, insbesondere wobei das künstliche neuronale Netzwerk gemäß einem Verfahren nach einem der Ansprüche 1 bis 8 trainiert ist. Das Verfahren umfasst die folgenden Schritte:

i) Aufnehmen von jeweils zumindest einem Bild des Objekts, insbesondere des lichtemittierenden Elements mit zumindest zwei Kameras;

ii) Ermitteln von Koordinaten des Objekts, insbesondere des lichtemittierenden Elements, insbesondere in den zumindest zwei Bildern;

iii) Verwenden der in Schritt ii) ermittelten Koordinaten als Inputparameter für die Input-Schicht des künstlichen neuronalen Netzwerks;

iv) Ermitteln der Position des Objekts, insbesondere der Position des lichtemittierenden Elements und/oder der Position der Spitze des Eingabegerätes durch das künstliche neuronale Netzwerk, basierend auf den ermittelten Koordinaten des Objekts, insbesondere des lichtemittierenden Elements.

Dabei weist das künstliche neuronale Netzwerk wenigstens zwei Subnetzwerke auf und Sensoren der Kameras sind jeweils in wenigstens zwei Koordinatenbereiche eingeteilt, die jeweils einem der Subnetzwerke zugeordnet sind, wobei die ermittelten Koordinaten einem der Koordinatenbereiche zugewiesen und dem entsprechenden Koordinatenbereich zugeordneten Subnetzwerk zur weiteren Auswertung übergeben werden. Die Einteilung in mehrere Koordinatenbereiche wurde oben hinsichtlich des Verfahrens zum Trainieren des künstlichen neuronalen Netzwerks bereits erläutert. Von besonderem Vorteil ist im Einsatz des auf diese Weise in Subnetzwerke aufgeteilten künstlichen neuronalen Netzwerks, dass die Verarbeitungszeit für die Positionsbestimmung reduziert wird und so eine vom Nutzer wahrnehmbare Latenz spürbar zurückgeht, insbesondere verschwindet.

Dabei sind die Kameras vorzugsweise an einer Empfangseinheit angebracht, insbesondere wobei die Empfangseinheit eine Head-Mounted-Unit (HMU) ist, welche am Kopf eines Benutzers befestigbar ist.

Das erfindungsgemäß trainierte künstliche neuronale Netzwerk ermöglicht eine präzise Bestimmung der Position des Objekts, im Speziellen des lichtemittierenden Elements.

Bezüglich der sonstigen Eigenschaften und Vorteile des Verfahrens zur Bestimmung der Position des Objekts wird auf die obigen Erläuterungen bezüglich des Verfahrens zum Trainieren des künstlichen neuronalen Netzwerks verwiesen, welche ebenso für das Verfahren zur Bestimmung der Position des Objekts gelten und umgekehrt.

Die Aufgabe wird ferner erfindungsgemäß gelöst durch eine Vorrichtung zum Trainieren eines künstlichen neuronalen Netzwerks zur Positionsbestimmung eines Eingabegeräts. Die Vorrichtung umfasst ein Gerüst, wobei das Gerüst einen im Wesentlichen horizontalen, insbesondere horizontalen Abschnitt und einen im Wesentlichen vertikalen, insbesondere vertikalen Abschnitt aufweist. Das Gerüst weist im Bereich des horizontalen Abschnitts einen Roboter, insbesondere einen Industrieroboter und im Bereich des vertikalen Abschnitts zumindest zwei Kameras auf. Der Roboter weist ein lichtemittierendes Element auf, wobei die zumindest zwei Kameras in der Weise positioniert sind, dass diese das lichtemittierende Element erfassen können. Die Vorrichtung umfasst ferner eine Steuer- und/oder Regeleinrichtung. Die Steuer- und/oder Regeleinrichtung arbeitet eine Programmfolge ab, wobei die Programmfolge das beliebige Positionieren des lichtemittierenden Elementes in einem definieren Bereich innerhalb des Arbeitsraums des Industrieroboters sowie die Aufnahme zumindest zweier Bilder des lichtemittierenden Elementes an der jeweiligen Position beinhaltet.

Dabei ist die Steuer- und/oder Regeleinrichtung dazu ausgebildet, die Vorrichtung zum Trainieren des künstlichen neuronalen Netzwerks dazu zu veranlassen, ein oben beschriebenes Verfahren zum Trainieren des künstlichen neuronalen Netzwerks durchzuführen. Bezüglich der sonstigen Eigenschaften und Vorteile der Vorrichtung wird auf die obigen Erläuterungen bezüglich des Verfahrens zum Trainieren des künstlichen neuronalen Netzwerks verwiesen, welche ebenso für die Vorrichtung gelten und umgekehrt.

Dabei ist unter dem Ausdruck "arbeitet eine Programmfolge ab" zu verstehen, dass die Steuer- und/oder Regeleinheit dazu ausgebildet ist, diese Programmfolge abzuarbeiten.

Wie bereits zum Training erläutert ist dabei grundsätzlich und im Folgenden unter einem "Roboter" eine verstellbare mechanische und/oder elektrische Einrichtung zu verstehen, welche dazu ausgebildet ist, das Objekt bzw. das lichtemittierende Element an eine gewünschte Position im Raum zu verfahren und/oder das lichtemittierende Element an der gewünschten Position einzuschalten.

Alternativ zur Ausgestaltung als Industrieroboter kann der Roboter beispielsweise auch als bewegliche Wand ausgebildet sein, die in wenigstens einer Richtung bewegbar ist und eine Vielzahl von selektiv ansteuerbaren lichtemittierenden Elementen aufweist. Die lichtemittierenden Elemente können als Matrix angeordnet sein.

Mittels der erfindungsgemäßen Vorrichtung kann ein neuronales Netz präzise trainiert werden, da der Roboter das lichtemittierende Element mit hoher Präzision genau an die entsprechende gewünschte Position verfahren kann. Die entsprechenden Positionsdaten stehen dann als Trainingsdaten für das künstliche neuronale Netzwerk zur Verfügung.

Insbesondere kann das Training des künstlichen neuronalen Netzes mittels der erfindungsgemäßen Vorrichtung vollautomatisch erfolgen, indem in der Steuer- und Regeleinrichtung die passenden Befehle für den Roboter und die Kameras hinterlegt werden.

Ein Aspekt der Erfindung sieht vor, dass die Programmfolge die Positionierung des lichtemittierenden Elements innerhalb des definierten Bereichs mittels Zufallsgenerator vorsieht, wobei die Wahrscheinlichkeit einer Positionierung an einer bestimmten Position innerhalb des definierten Bereichs im Wesentlichen gleichverteilt ist. Auf diese Weise wird das künstliche neuronale Netzwerk gleichmäßig über den Sichtbereich der Kameras hinweg trainiert.

Ein Aspekt der Erfindung sieht vor, dass die Kameras an einer Empfangseinheit angebracht sind, insbesondere wobei die Empfangseinheit eine Head-Mounted-Unit (HMU) ist, welche am Kopf eines Benutzers befestigbar ist. Das künstliche neuronale Netzwerk kann dabei auf einem Steuergerät der HMU integriert sein oder auf einem externen Computer, Laptop, Smart Phone oder einem anderen Smart Device, das mit der HMU signalübertragend verbunden ist.

Die Aufgabe wird ferner erfindungsgemäß gelöst durch ein System mit einer Empfangseinheit. Die Empfangseinheit umfasst wenigstens zwei Kameras, mit welchen lichtemittierende Elemente erfassbar sind. Das System umfasst ferner ein Steuergerät, das mit den Kameras zur Signalübertragung verbunden ist. Die Empfangseinheit weist einen vorderen Bereich vor der Empfangseinheit auf, wobei die Kameras derart orientiert sind, dass ein Objekt im vorderen Bereich der Empfangseinheit erfassbar ist. Das Steuergerät weist ein künstliches neuronales Netzwerk auf, das gemäß einem Verfahren nach einem der Ansprüche 1 bis 8 trainiert ist. Bezüglich der Eigenschaften und Vorteile des Systems wird auf die obigen Erläuterungen bezüglich des Verfahrens zum Trainieren des künstlichen neuronalen Netzwerks verwiesen, welche ebenso für das System gelten und umgekehrt.

Das Steuergerät kann dabei in die Empfangseinheit selbst integriert sein oder in einen externen Computer, Laptop, Smart Phone oder in ein anderes Smart Device, das mit der Empfangseinheit signalübertragend verbunden und/oder verbindbar ist.

Ein Aspekt der Erfindung sieht vor, dass das künstliche neuronale Netzwerk speziell für die Empfangseinheit trainiert ist. Anders ausgedrückt wird jede Empfangseinheit mittels der erfindungsgemäßen Vorrichtung einzeln kalibriert, indem das künstliche neuronale Netzwerk für die Positionserkennung trainiert wird. Dadurch können Abweichungen in den Bauteilen der Empfangseinheit durch Herstellungstoleranzen, also beispielsweise Abweichungen des Abstands zwischen den Kameras und/oder Variationen in der Lichtempfindlichkeit der Sensoren der Kameras, ausgeglichen werden, da das künstliche neuronale Netzwerk speziell auf diese Konfiguration inkl. der Abweichungen trainiert ist.

Insbesondere wird jede Empfangseinheit am Ende der Herstellung, also "end of line" kalibriert.

Weitere Vorteile und Eigenschaften der Erfindung ergeben sich aus der nachfolgenden Beschreibung und den beigefügten Zeichnungen, auf die Bezug genommen wird. In diesen zeigen:

- Figur 1 ein Set mit einem Eingabegerät und einer Empfangseinheit;
- Figur 2 ein Eingabegerät in Seitenansicht, wobei ein vorderer Bereich v (rechts) und ein hinterer Bereich h (links) erkennbar ist;
- Figuren 3a und 3b eine Empfangseinheit in perspektivischer Ansicht von oben (Fig. 3a) und das Innere einer solchen Empfangseinheit (Fig. 3b);
- Figuren 4a und 4b schematisch den Aufbau von zwei Eingabegeräten;
- Figur 5 schematisch ein Ablaufdiagramm der Schritte eines Verfahrens zur Bestimmung einer Position des Eingabegeräts von Figur 2;

- Figur 6a und 6b schematisch den Aufbau einer erfindungsgemäßen Vorrichtung zum Trainieren eines künstlichen neuronalen Netzwerks zur Positionsbestimmung eines Eingabegerätes in der Seiten- und Vorderansicht; und

- Figur 7 schematisch ein Ablaufdiagramm eines erfindungsgemäßen Verfahrens zum Trainieren eines künstlichen neuronalen Netzwerks.

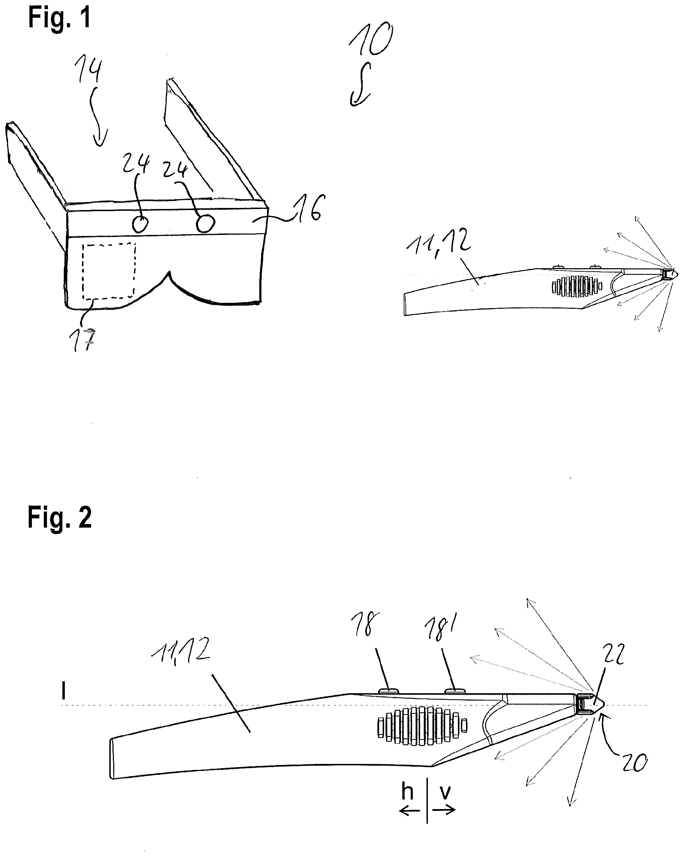

In Figur 1 ist schematisch ein Set 10 mit einem Objekt 11, im gezeigten Ausführungsbeispiel einem Eingabegerät 12, und einem Bildprojektionssystem 14 gezeigt.

Das Bildprojektionssystem 14 ist als ein Augmented-Reality-Headset ausgebildet, welches eine Empfangseinheit 16, und wenigstens eine Projektionsfläche 17 aufweist.

Allgemein ausgedrückt handelt es sich bei dem Set 10 um ein Augmented-Reality-System, das einem Nutzer eine Interaktion mit virtuellen Inhalten und Informationen ermöglicht, die in die reale Umgebung des Nutzers eingebettet werden.

Im Folgenden wird lediglich auf das Eingabegerät 12 Bezug genommen, wobei immer auch allgemeiner das Objekt 11 gemeint ist.

Die grundsätzliche Funktionsweise solcher Augmented-Reality-Systeme ist wie folgt: Der Nutzer bedient das Augmented-Reality-System mittels des Eingabegeräts 12. Der Nutzer kann über das Eingabegerät 12 mit den virtuellen Inhalten interagieren, die ihm mittels des Bildprojektionssystems 14 auf der wenigstens einen Projektionsfläche 17 angezeigt werden. Die Empfangseinheit 16 dient dabei dazu, eine Position des Eingabegeräts 12 zu ermitteln und so eine präzise Interaktion zwischen dem Nutzer und den virtuellen Inhalten zu ermöglichen.

Der genaue Aufbau und die Funktionsweise des Sets 10 bzw. des Eingabegeräts 12 und des Bildprojektionssystems 14 wird weiter unten noch näher erläutert.

Die übergeordnete Idee der Erfindung ist die Entwicklung einer intuitiven Interaktion zwischen Mensch und der digitalen virtuellen Umgebung. Losgelöst von den jeweiligen Endgeräten soll die Erfindung eine der menschlichen Intuition entsprechende Bedienoberfläche bieten. Da virtuelle Inhalte physikalisch nicht existent sind, können diese nur durch physikalisch existente Hilfsmittel bewegt, verändert oder erschaffen werden. Eine Positionsbestimmung eines solchen Hilfsmittels im Raum, um reale Bewegungsabläufe eines Benutzers in die virtuelle Umgebung sinnvoll einbinden zu können, ist folglich essentiell.

In Fig. 2 ist eine Seitenansicht des Eingabegeräts 12 in Form eines Stifts gezeigt. Das Eingabegerät 12 ist im Querschnitt im Wesentlichen kreisrund, ergonomisch geformt und sie weist zwei Betätigungselemente 18, 18' auf.

Ein Betätigungselement 18 kann als Ein-/Ausschalter verwendet werden, das andere Betätigungselement 18' dient als Taster zur Signalübertragung. Die Anzahl der Taster kann natürlich beliebig und bedarfsoptimiert gewählt werden.

Im Bereich der Stiftspitze 20 ist zumindest ein lichtemittierendes Element 22, insbesondere zwei lichtemittierende Elemente 22, angebracht. Die Stiftspitze 20 weist ebenso zumindest einen druck- bzw. berührungssensitiven Sensor auf. Nicht zu erkennen ist ein Micro-USB-Anschluss zum Laden eines integrierten Akkumulators.

Die lichtemittierenden Elemente 22 sind vorzugsweise LEDs, jedoch sind alle Arten von elektromagnetische Wellen emittierenden Bauteilen denkbar. Wesentlich ist, dass die lichtemittierenden Elemente so ausgerichtet sind, dass sie elektromagnetische Wellen (bzw. Photonen) in Richtung des hinteren Bereichs h emittieren, d.h. im Wesentlichen in Richtung des Benutzers des Eingabegeräts 12. Dabei werden die elektromagnetischen Wellen auch zur Seite, also im Wesentlichen orthogonal zur Längsachse des Eingabegeräts emittiert.

Die Stiftspitze 20 stellt den drucksensitiven- bzw. berührungssensitiven Bereich des Eingabegeräts 12 dar. Dies kann beispielsweise durch Piezoelektrizität oder dergleichen erfolgen.

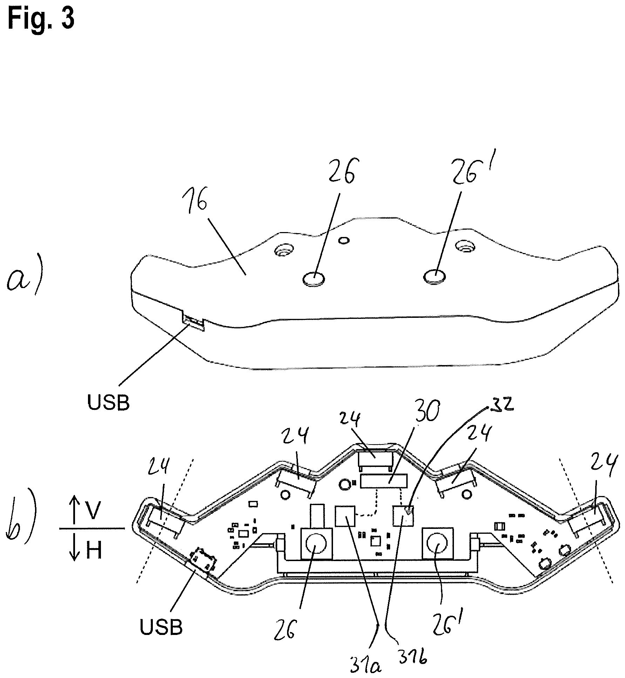

In Fig. 3a und Fig. 3b ist die Empfangseinheit 16 dargestellt. Diese kann auf das (in Figur 1 gezeigte) Bildprojektionssystem 14 montiert werden oder Teil davon sein. An der Vorderseite befinden sich zur Illustration fünf Kameras 24. Bevorzugt sind zwei Kameras 24 verbaut.

Selbstverständlich kann die Anzahl an verwendeten Kameras 24 an den Einsatzzweck angepasst werden. Insbesondere sind auch drei oder vier Kameras 24 denkbar.

Auch die dargestellte Empfangseinheit 16 weist zwei Betätigungselemente 26, 26' auf, wobei ein Betätigungselement 26 als Ein-/Ausschalter verwendet werden kann und das andere Betätigungselement 26' zum Starten des Pairings vorgesehen ist, genauer gesagt zum Starten des Pairings zwischen dem Eingabegerät 12 und der Empfangseinheit 16.

Die Spannungsversorgung kann via Stromkabel (z.B. via Micro-USB von außen) oder via Akkumulator erfolgen. Zur Befestigung des Bildprojektionssystems 14 können noch nicht gezeigte Befestigungsanker vorgesehen sein.

Mit der Empfangseinheit 16 bzw. mit den an der Empfangseinheit 16 angebrachten Kameras 24 wird das zumindest eine lichtemittierende Element 22 detektiert. Die zumindest zwei Kameras 24 sind dabei derart ausgerichtet, dass ein lichtemittierendes Element 22 im vorderen Bereich V der Empfangseinheit 16 mit allen Kameras 24 detektierbar ist.

Die Empfangseinheit 16 ist dabei als HMU (head mounted unit) ausgebildet, nämlich als das Augmented-Reality-Headset von Figur 1. Die HMU wird also von einem Benutzer am Kopf getragen. Da der Benutzer das Eingabegerät 12 vorzugsweise wie einen Stift hält, befindet sich das Eingabegerät 12 typischerweise im vorderen Bereich V der Empfangseinheit 16.

Da das zumindest eine lichtemittierende Element 22 elektromagnetische Wellen in Richtung des hinteren Bereichs h des Eingabegeräts 12, d.h. in Richtung des Benutzers und folglich in Richtung der HMU mit der Empfangseinheit 16 emittiert, ist das zumindest eine lichtemittierende Element 22 des Eingabegeräts 12 detektierbar. Je nachdem, ob ein Benutzer das Eingabegerät 12 in der rechten oder linken Hand hält, wird eines der vorzugsweise beiden lichtemittierenden Elemente 22 detektiert, wobei die beiden lichtemittierenden Elemente 22 entsprechend nebeneinander angeordnet sind.

Im Falle einer Stiftspitze 20 mit reflektierenden Innenkegel, wobei durch Beleuchtung des Innenkegels elektromagnetische Wellen in Richtung des hinteren Bereichs h des Eingabegeräts reflektiert werden, ist lediglich ein lichtemittierendes Element 22 notwendig.

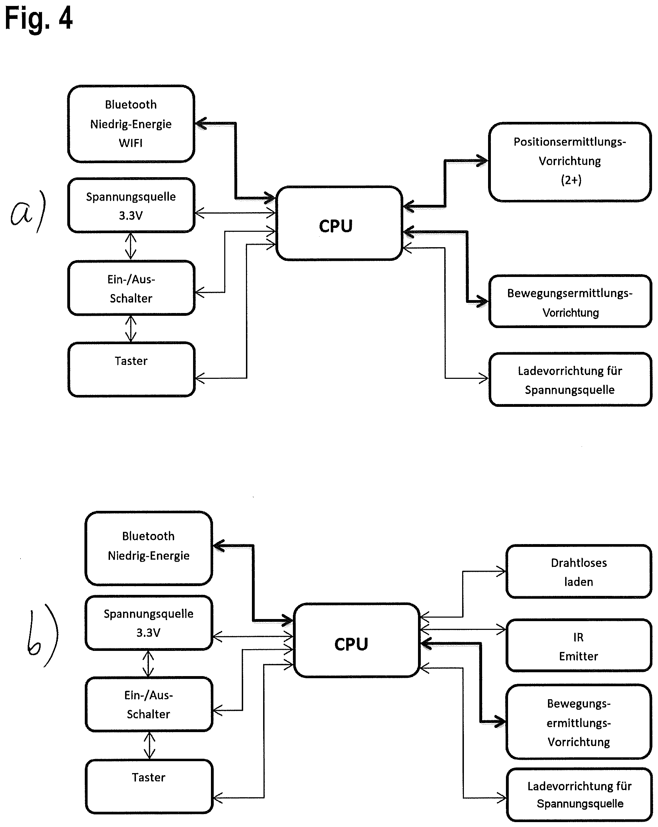

Fig. 4a und 4b zeigen schematisch den Aufbau von zwei Eingabegeräten 12. Vorgesehen sind eine Spannungsquelle (Power Supply), ein Ein-/Ausschalter (ON/OFF Controller), Taster (Button Observer), eine Ladevorrichtung für die Spannungsquelle (Battery Charger oder Wireless Charger) und in beiden Fällen eine Sendeeinheit zur Signalübertragung (Bluetooth LowEnergy/WIFI). Zusätzlich können noch verschiedene Positionsermittlungsvorrichtungen (Multiple Object Tracking Units, Motion Tracking Device) vorgesehen sein. Lichtemittierende Elemente 22 (IR Emitter) sind ebenfalls vorgesehen.

Die Positionsbestimmung des Eingabegeräts 12 kann beispielsweise mit Hilfe von mehreren Infrarot LED (IR-LED), welche in einem definierten Muster am Gehäuse des Eingabegeräts montiert sind, funktionieren. Mehrere auf der Empfangseinheit montierte Kameras beispielsweise in Form sogenannten "Multiple Object Tracking Modules" wie etwa der Firma PixArt Imaging Inc. vom Typ PAJ7025R3, detektieren die IR-LED an dem Eingabegerät im Raum.

Eine solche Positionsbestimmung erfordert jedoch hochgradig präzise Apparaturen bzw. spezielle Linsensysteme, was äußerst kostspielig ist.

Aufgrund der höheren Genauigkeit sowie Wirtschaftlichkeit wird hier als besonders bevorzugte Alternative ein künstliches neuronales Netzwerk 32 zur Positionsbestimmung eingesetzt.

Insbesondere handelt es sich bei dem eingesetzten künstlichen neuronalen Netzwerk 32 um ein "fully connected neuronal network", bei dem die Neuronen wenigstens einer, insbesondere aller Schichten jeweils mit allen Neuronen der folgenden Schicht verbunden sind.

Zu diesem Zweck weist die Empfangseinheit 16 ein Steuergerät 30 auf, das mit den Kameras 24 signalübertragend verbunden ist.

Alternativ kann das Steuergerät 30 auch Teil eines externen Computers, Laptops, Smartphones und/oder anderen Smart Devices sein.

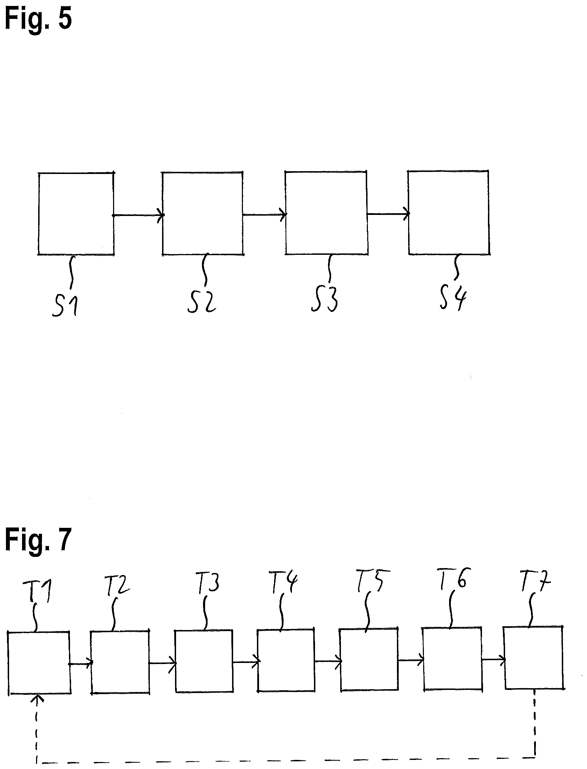

Das Steuergerät 30 ist dazu ausgebildet, die Empfangseinheit 16 dazu zu veranlassen, das im Folgenden anhand der Figur 5 beschriebene Verfahren zur Bestimmung der Position des Eingabegeräts 12 durchzuführen.

Genauer gesagt umfasst das Steuergerät 30 eine Recheneinheit 31a und eine Speichereinheit 31b, auf der ein Computerprogramm hinterlegt ist, welches das künstliche neuronale Netzwerk 32 umfasst.

Das Computerprogramm umfasst Programmcodemittel, die dazu ausgebildet sind, die Empfangseinheit 16 dazu zu veranlassen, das im Folgenden beschriebene Verfahren zur Bestimmung der Position des Eingabegeräts 12 durchzuführen, wenn das Computerprogramm auf der Recheneinheit 31a des Steuergeräts 30 ausgeführt wird.

Das im Folgende beschriebene Verfahren eignet sich im Prinzip zur Bestimmung der Position beliebiger Objekte. Beispielsweise können mittels der im Folgenden beschriebenen Methode das lichtemittierende Element 22, das Eingabegerät 12, ein Werkzeug, oder jedes andere beliebige, optisch erfassbare Objekt erfasst und dessen Position bestimmt werden.

Im Folgenden wird das Verfahren am Beispiel des Eingabegeräts 12 bzw. des lichtemittierenden Elements 22 erläutert.

Mittels der Kameras 24 wird jeweils ein Bild des wenigstens einen lichtemittierenden Elements 22 aufgenommen (Schritt S1).

Da sich die Kameras 24 an voneinander verschiedenen Orten am HMU befinden, werden also wenigstens zwei Bilder des lichtemittierenden Elements 22 aus voneinander verschiedenen Blickwinkeln aufgenommen. Aus diesem Grund kann basierend auf den wenigstens zwei aufgenommenen Bildern die Position des lichtemittierenden Elements 22 bestimmt werden.

Nun werden Koordinaten des lichtemittierenden Elements 22 ermittelt (Schritt S2). Genauer gesagt werden Koordinaten der durch das lichtemittierende Element beleuchteten Pixel der Sensoren der Kameras 24 ermittelt, insbesondere von CCD-Sensoren der Kameras 24.

Wenn die Empfangseinheit 16 also beispielsweise zwei Kameras 24 aufweist, werden in Schritt S2 für beleuchtete Pixel Koordinatenpaare $(x_i, y_i)$ ermittelt, welche jeweils die Position des Pixels auf dem Sensor der entsprechenden Kamera 24 repräsentieren. Insbesondere wird also für jeden beleuchteten Pixel der Sensoren der Kameras 24 jeweils ein solches Koordinatenpaar ermittelt.

Alternativ oder zusätzlich können die Kameras 24 oder genauer gesagt die Sensoren der Kameras 24 dazu ausgebildet sein, automatisch einen Mittelpunkt der beleuchteten Pixel der Sensoren zu ermitteln. In diesem Fall werden also die Koordinaten des Mittelpunkts der beleuchteten Pixel ermittelt und dienen als Input für das künstliche neuronale Netzwerk. Dementsprechend wird nur ein Koordinatenpaar $(x_i, y_i)$, nämlich die Koordinaten des Mittelpunkts der beleuchteten Pixel, an das künstliche neuronale Netzwerk übergeben.

Optional kann zusätzlich zu den ermittelten Koordinaten ein Intensitätsparameter ermittelt werden, der angibt, wie groß eine Strahlungsintensität des empfangenen Lichts am jeweiligen beleuchteten Pixel auf dem Sensor ist.

Die ermittelten Koordinaten werden an das künstliche neuronale Netzwerk 32 übergeben und als Inputparameter für die Input-Schicht des künstlichen neuronalen Netzwerks verwendet (Schritt S3).

Optional kann zusätzlich zu den ermittelten Koordinaten der ermittelte Intensitätsparameter als Inputparameter für die Input-Schicht des künstlichen neuronalen Netzwerks verwendet werden.

Das künstliche neuronale Netzwerk 32 ermittelt basierend auf den ermittelten Koordinaten, also zumindest basierend auf den ermittelten Koordinaten die Position des wenigstens einen lichtemittierenden Elements 22 und damit auch die Position der Stiftspitze 20 (Schritt S4).

Auch in Fällen, an denen das lichtemittierende Element 22 nicht an der Spitze 20 des Eingabegerätes 12 bzw. des Objektes 11 vorgesehen ist, kann auf die Position der Spitze oder eines beliebigen Punktes des Eingabegerätes 12 bzw. des Objektes 11 geschlossen werden, da der Aufbau des Eingabegeräts 12 bzw. des Objektes 11 bekannt ist. In diesem Fall ist zur Bestimmung der Position der Spitze 20 jedoch eine inertiale Messeinheit (IMU) notwendig, wie unten noch näher erläutert ist.

Anders ausgedrückt bekommt das künstliche neuronale Netzwerk 32 als Inputparameter die ermittelten Koordinaten des lichtemittierenden Elements, optional den wenigstens einen Intensitätsparameter, und erzeugt als Output die Position, genauer gesagt die dreidimensionale räumliche Position des lichtemittierenden Elements 22 und damit die räumliche Position des Eingabegeräts 12 und/oder der Stiftspitze 20.

Zur Bestimmung der Position der Stiftspitze 20 bzw. Zeigespitze des Eingabegeräts 12, können zuzüglich zu den Positionsinformationen der Kamerasensoren noch Neigungs- und Rotationsdaten aus einer inertialen Messeinheit (IMU) des Eingabegeräts 12 verwendet werden. Die Rotations- und Neigungsdaten werden z.B. mit Hilfe eines Gyroskops und eines Magnetometers ermittelt.

Die Informationen des Gyroskops, eines Beschleunigungsaufnehmers und/oder des Magnetometers sowie der Zustand von auf dem Eingabegerät befindlichen Betätigungselemente kann z.B. via Bluetooth, insbesondere Bluetooth Low Energy (BLE), vom Eingabegerät zum Endgerät übertragen werden. Auf der Empfangseinheit befindet sich beispielsweise ein ARM Cortex A7 Mikroprozessor.

Um die Position der Spitze des Eingabegeräts 12 mittels künstlicher Intelligenz (KI) zu bestimmen, muss das künstliche neuronale Netz eingelernt werden. Dies erfolgt bevorzugt mit dem sogenannten AdaGrad-Algorithmus ("adaptive gradient"-Algorithmus).

Die künstlichen Neuronen der "Input"-Schicht des künstlichen neuronalen Netzes repräsentieren die Koordinaten der vom wenigstens einen lichtemittierenden Element 22 beleuchteten Pixel der Kameras 24 (Beleuchtungspunkt auf CCD-Sensoren). Im Falle von zwei Kameras 24 entspräche dies beispielsweise vier Neuronen. Die beispielsweise drei künstlichen Neuronen der "Output"-Schicht entsprechen den x-, y- und z-Koordinaten im Raum.

Alternativ kann eine andere geeignete Anzahl von Neuronen für die Input-Schicht und/oder für die Output-Schicht des künstlichen neuronalen Netzwerks gewählt werden.

Zum Einlernen des künstlichen neuronalen Netzes bzw. zur Bestimmung und Minimierung einer entsprechenden Kostenfunktion wurde eine spezielle Vorrichtung und ein spezielles Verfahren entwickelt.

Auch die folgenden Erläuterungen erfolgen beispielhaft für das lichtemittierende Element 22 bzw. für das Eingabegerät 12. Jedoch sei darauf hingewiesen, dass die folgenden Erläuterungen ebenso, ggf. mit kleinen Anpassungen, für beliebige Objekte 11 gelten.

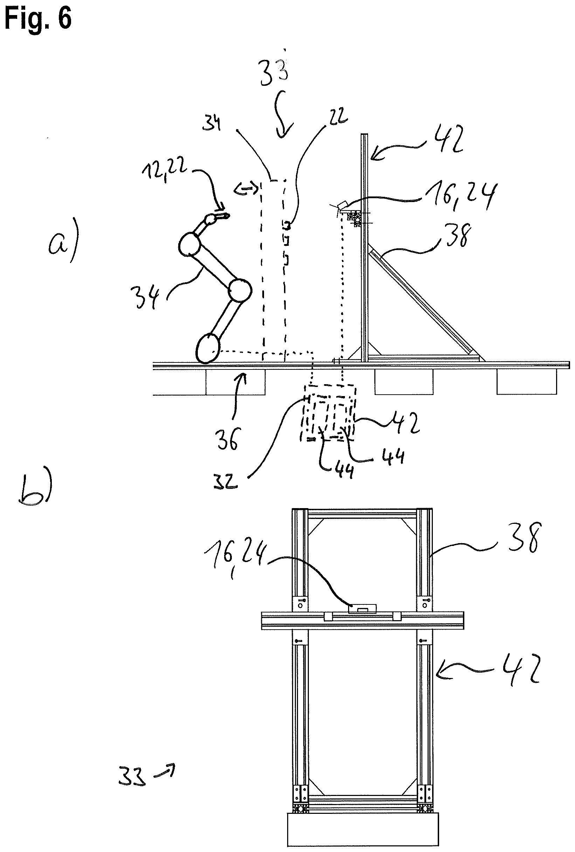

Fig. 6 zeigt eine Kalibrierstation bzw. eine Vorrichtung 33 zum Trainieren eines künstlichen neuronalen Netzwerks zur Positionsbestimmung eines lichtemittierenden Elements 22 bzw. insbesondere eines Eingabegeräts 12 mit zumindest zwei Kameras 24 bzw. insbesondere mit einer Empfangseinheit 16.

Das lichtemittierende Element 22 bzw. das Eingabegerät 12 wird an einem Roboter 34 befestigt, der hier als Industrieroboter ausgebildet ist, wobei sich der Roboter 34 in einem horizontalen Bereich 36 der Vorrichtung 33 befindet. Der horizontale Bereich 36 wird durch einen Teil eines Gerüstes 38 gebildet, wobei letzteres vorzugsweise aus Aluminiumprofilen gebildet ist. Im Wesentlichen rechtwinklig zum horizontalen Bereich 36 ist ein vertikaler Bereich 40 angeordnet, welcher ebenfalls Teil des Gerüstes ist und vorzugsweise aus Aluminiumprofilen gebildet wird.

Am vertikalen Bereich 40 werden zumindest zwei Kameras 24 bzw. bevorzugt die Empfangseinheit 16 mit den zumindest zwei Kameras 24 angebracht. Letztere ist derart ausgerichtet, dass das lichtemittierende Element 22 von den Kameras 24 erfasst werden kann. Die Basis des Gerüsts 38 bilden schwingungsdämpfende Elemente bzw. Erschwerungselemente wie beispielsweise Granitsockel.

Die in Figur 6 gezeigte Ausgestaltung des Roboters 34 als Industrieroboter ist nur eine mögliche Ausgestaltung.

Alternativ zur Ausgestaltung als Industrieroboter kann der Roboter 34 beispielsweise auch als bewegliche Wand ausgebildet sein, die in horizontaler Richtung gegenüber dem Gerüst 38 bewegbar ist und eine Matrix aus selektiv ansteuerbaren lichtemittierenden Elementen 22 aufweist. Dies ist in Figur 6 gestrichelt dargestellt.

Die erfindungsgemäße Vorrichtung 33 zum Trainieren des künstlichen neuronalen Netzes weist weiters eine Steuer- und /oder Regeleinrichtung 42 auf (in Figur 6a lediglich schematisch angedeutet), wobei diese eine Programmfolge steuert bzw. regelt. Das entsprechende Programm bestimmt beispielsweise anhand eines Zufallsgenerators anzufahrende Positionen innerhalb eines im Programm definierten Bereichs bzw. Volumens innerhalb des Arbeitsraums des Roboters 34. Ein solches Volumen kann beispielsweise kugel-, quader- oder würfelförmig sein. Ebenso ist denkbar, dass die Grenzen des Volumens durch die mögliche Reichweite eines Armes eines menschlichen Benutzers vorgegeben sind.

Die Steuer- und/der Regeleinrichtung 42 ist dazu ausgebildet, die Vorrichtung 33 dazu zu veranlassen, das im Folgenden anhand von Figur 7 beschriebene Verfahren zum Trainieren des künstlichen neuronalen Netzwerks durchzuführen.

Der Roboter 34 bewegt das lichtemittierende Element 22 bzw. das Eingabegerät an die entsprechende Position (Schritt T1), wobei das Programm darauffolgend einen Befehl zum Auslösen der beiden Kameras gibt und anschließend zwei Daten-Sets abspeichert (Schritt T2).

Ein erstes Daten-Set (Trainingsdaten-Set) beinhaltet die eben angefahrene (reale), also tatsächliche Position (x-, y- und z-Koordinaten), das zweite Daten-Set (Netzwerkdaten-Set) beinhaltet Koordinaten der (vom lichtemittierenden Element 22) beleuchteten Pixel der Kameras 24, insbesondere der beiden Kameras 24.

Beispielsweise können Kameras 24 mit CCD-Sensoren mit 2048 x 2048 Pixel verwendet werden, wobei die Inputparameter für die künstlichen Neuronen der Input-Schicht, abhängig von der Position bzw. der Positionen der beleuchteten Pixel der CCD-Sensoren zwischen 0 und 2048 betragen können. Natürlich können Kameras 24 mit CCD-Sensoren oder dergleichen mit beliebiger Anzahl von Pixeln verwendet werden.

Anders ausgedrückt werden also zeitgleich wenigstens zwei Bilder vom lichtemittierenden Element 22 bzw. vom Eingabegerät 12 aufgenommen, nämlich wenigstens ein Bild mit jeder Kamera 24.

Die tatsächliche Position des lichtemittierenden Elements 22 bzw. des Eingabegeräts 12 ist präzise bekannt, da die Steuer- und/oder Regeleinrichtung 42 den Roboter 34 derart ansteuert, dass das lichtemittierende Element 22 bzw. das Eingabegerät 12 genau an die entsprechende gewünschte Position verfahren wird bzw. ein bestimmtes lichtemittierendes Element 22 der Matrix eingeschaltet wird.

Insbesondere wird die tatsächliche Position, an welcher das lichtemittierende Element 22 bzw. das Eingabegerät 12 positioniert wird, per Zufallsgenerator ermittelt.

Dabei kann die Wahrscheinlichkeit für die Positionierung an einer bestimmten Position über den Arbeitsbereich des Roboters 34 hinweg im Wesentlichen gleichverteilt sein, insbesondere ist sie gleichverteilt.

Basierend auf den in Schritt T2 mittels der wenigstens zwei Kameras 24 aufgenommenen Bildern, also basierend auf dem Netzwerkdaten-Set, werden Koordinaten des lichtemittierenden Elements 22 ermittelt (Schritt T3).

Dabei und im Folgenden sind unter "Koordinaten" die Koordinaten von beleuchteten Pixeln der Sensoren der Kameras 24 und/oder Koordinaten von Pixeln in einem mittels der Sensoren verarbeiteten Abbild des lichtemittierenden Elements 22 zu verstehen.

Die ermittelten Koordinaten werden nun als Inputparameter für die Input-Schicht des künstlichen neuronalen Netzwerks verwendet (Schritt T4). Anders ausgedrückt erhalten die Neuronen der Eingangsschicht des künstlichen neuronalen Netzwerks ein Eingangssignal mit den ermittelten Koordinaten.

Das künstliche neuronale Netzwerk 32 ermittelt, genauer gesagt berechnet basierend auf den ermittelten Koordinaten die dreidimensionale Position des wenigstens einen lichtemittierenden Elements 22 (Schritt T5).

Das künstliche neuronale Netzwerk 32 generiert also als Ausgangssignal die dreidimensionale Position des lichtemittierenden Elements 22, insbesondere die Position des Eingabegeräts 12.

Die vom künstlichen neuronalen Netzwerk 32 ermittelte Position wird nun mit der tatsächlichen Position des lichtemittierenden Elements 22 bzw. des Eingabegeräts 12 verglichen (Schritt T6).

Zu diesem Zweck wird eine Kostenfunktion ermittelt, welche die vom künstlichen neuronalen Netzwerk 32 ermittelte Position sowie die tatsächliche Position des lichtemittierenden Elements 22 bzw. des Eingabegeräts 12 umfasst. Die Kostenfunktion, im Folgenden mit $\Lambda(x)$ bezeichnet, hat die folgende Form:

$$\Lambda(x_{in}) = \sum_{i=1}^{n_{out}} (O_i(x_{in}) - L_i(x_{in}))^2 .$$

Dabei ist $x_{in}$ ein Vektor, welcher die Eingangsgrößen des künstlichen neuronalen Netzwerks 32 enthält, also die basierend auf den Bildern ermittelten Koordinaten des lichtemittierenden Elements 22 bzw. des Eingabegeräts 12.

$n_{out}$ ist die Zahl der Ausgangsgrößen des künstlichen neuronalen Netzwerks. Im oben beschriebenen Fall ist die Zahl der Ausgangsgrößen gleich 3, da zur Ermittlung der Position des lichtemittierenden Elements 22 bzw. des Eingabegeräts 12 die drei Raumkoordinaten des lichtemittierenden Elements 22 bzw. des Eingabegeräts 12 ermittelt werden.

$O_i(x)$ ist ein Vektor, welcher die Ausgangsgrößen des künstlichen neuronalen Netzwerks 32 umfasst, also die ermittelte Position des lichtemittierenden Elements 22 bzw. des Eingabegeräts 12. Beispielsweise ist also $O_1$ die vom künstlichen neuronalen Netzwerk 32 ermittelte x-Koordinate, $O_2$ die ermittelte y-Koordinate und $O_3$ die ermittelte z-Koordinate der Position des lichtemittierenden Elements 22 bzw. des Eingabegeräts 12.

$L_i(x)$ ist ein Vektor, welcher die Trainingsdaten für das künstliche neuronale Netzwerk 32 umfasst. Beispielsweise ist also $L_1$ die tatsächliche x-Koordinate, $L_2$ die tatsächliche y-Koordinate und $O_3$ die tatsächliche z-Koordinate der Position des lichtemittierenden Elements 22 bzw. des Eingabegeräts 12.

Die Kostenfunktion umfasst dementsprechend eine Abweichung der vom künstlichen neuronalen Netzwerk 32 ermittelten Position von der tatsächlichen Position des lichtemittierenden Elements 22 bzw. des Eingabegeräts 12, also einen Fehler bei der Positionsermittlung durch das künstliche neuronale Netzwerk.

Schließlich wird die Kostenfunktion minimiert, um das künstliche neuronale Netzwerk 32 zu trainieren (Schritt T7). Da die Kostenfunktion den Fehler des künstlichen neuronalen Netzwerks 32 bei der Positionsermittlung beschreibt, wird auf diese Weise auch der Fehler minimiert und die Genauigkeit der Positionsermittlung verbessert.

Die Kostenfunktion wird dabei minimiert, indem Gewichtungsfaktoren der Neuronen des künstlichen neuronalen Netzwerks 32 derart angepasst werden, dass der Fehler minimiert wird, beispielsweise mittels eines adaptiven Gradientenverfahrens.

Es sei darauf hingewiesen, dass die Kostenfunktion, je nach Definition, auch maximiert werden kann, um das künstliche neuronale Netzwerk 32 zu trainieren. Dies würde bei einer Definition der obigen Kostenfunktion mit negativem Vorzeichen zutreffen. Jedoch ist die oben genannte Definition der Kostenfunktion die intuitive Definition, bei der die Kosten mit zunehmendem Fehler steigen.

Vorzugsweise werden die oben genannten Schritte T1 bis T7 mehrfach wiederholt, und zwar für verschiedene Positionen im Arbeitsraum des Roboters (angedeutet durch den gestrichelten Pfeil in Figur 7).

Dabei kann in einer - auch separaten Ausführungsform - bei jeder Wiederholung der Schritte T1 bis T7 ein kombinierter Fehler $CE_m$ minimiert werden, anstatt nur den individuellen Fehler bzw. die Kostenfunktion $\Lambda_m(x_{in})$ der Wiederholung Nummer m zu minimieren.

Der kombinierte Fehler $CE_m$ in Wiederholung Nummer m ist gegeben durch

$$CE_m = \frac{\sum_{i=1}^{m} \Lambda_i(x_{in,i})}{m} = CE_{m-1} + \frac{\Lambda_m(x_{in,m}) - CE_{m-1}}{m}.$$

Der kombinierte Fehler $CE_m$ kann also in jedem Schritt rekursiv berechnet werden. Dementsprechend wird dann der mittlere Fehler über alle Trainingsdaten hinweg minimiert.

Optional kann die Definition des kombinierten Fehlers $CE_m$ wie folgt angepasst werden, um fehlerhafte und/oder ungeeignete Trainingsdaten zu kompensieren bzw. zu ignorieren:

$$CE_m = = CE_{m-1} + \frac{\min(\Lambda_m(x_{in,m}), \alpha \cdot CE_{m-1}) - CE_{m-1}}{m}$$

Durch diese Umdefinition des kombinierten Fehlers können einzelne, fehlerhafte und/oder ungeeignete Datensätze beim Training des künstlichen neuronalen Netzwerks 32 ignoriert werden.

Ein solcher ungeeigneter (Trainings-)Datensatz liegt beispielsweise vor, wenn zusätzlich zu vom lichtemittierenden Element 22 ausgestrahltem Licht auch noch reflektiertes Licht auf die Kameras 24 trifft. In diesem Fall würde das künstliche neuronale Netzwerk 32 einen sehr hohen Fehler generieren.

Jedoch ist durch die Umdefinition der Fehler in jedem Schritt auf $\alpha \cdot CE_{m-1}$ beschränkt, wobei $\alpha$ ein frei wählbarer Parameter ist. Beispielsweise liegt $\alpha$ zwischen 5 und 100, insbesondere zwischen 15 und 75, vorzugsweise zwischen 35 und 65.

Insbesondere verändert sich der maximal zulässige Fehler durch die rekursive Definition mit jeder Wiederholung der Trainingsschritte T1 bis T7.

Genauer gesagt wird der maximal zulässige Fehler im Allgemeinen mit steigender Zahl der Wiederholungen kleiner. Dieses Verhalten ist Vorteilhaft, da in den ersten Wiederholungen das künstliche neuronale Netzwerk 32 noch quasi untrainiert ist und deshalb oft große Fehler verursacht. Mit steigender Zahl der Wiederholungen und damit mit fortgeschrittenem Training des künstlichen neuronalen Netzwerks 32 wird hingegen der maximal zulässige Fehler kleiner.

Optional kann bei jeder Wiederholung der Schritte T7 ein vordefinierter Anteil der Neuronen des künstlichen neuronalen Netzwerks 32 ausgeschaltet werden. Unter "ausschalten" ist dabei zu verstehen, dass das entsprechende Neuron weder Input erhält noch Output generiert. Dies verringert die Gefahr einer Überanpassung des künstlichen neuronalen Netzwerks 32 wesentlich.

Die obigen Erläuterungen gehen davon aus, dass ein einzelnes künstliches neuronales Netzwerk 32 für das gesamte Blickfeld der beiden Kameras 24 verwendet wird.

Es hat sich jedoch herausgestellt, dass sowohl die benötigte Trainingszeit als auch die Zeit, die das künstliche neuronale Netzwerk 32 im Einsatz zur Positionserkennung (siehe die oben erläuterten Schritte S1 bis S4) wesentlich reduziert werden kann, wenn das Blickfeld der Kameras in mehrere Abschnitte eingeteilt wird.

Genauer gesagt werden die Pixel der Sensoren der Kameras 24 und/oder die entsprechenden Bildpixel in mehrere Koordinatenbereiche aufgeteilt und jedem der Koordinatenbereiche wird jeweils ein künstliches neuronales Subnetzwerk 44 zugeordnet.

Jedes Subnetzwerk 44 ist dann also ein Koordinatenbereich jeder der Kameras 24 zugeordnet.

Die Einteilung in die Koordinatenbereiche kann prinzipiell beliebig erfolgen. Jedoch hat sich eine Einteilung in drei vertikal verlaufende Koordinatenstreifen als praktikabel erwiesen.

Die Koordinatenbereiche bzw. die Aufteilung ist für jeden der Kameras 24 gleich und gleiche Koordinatenbereiche jeder Kamera 24 werden demselben Subnetzwerk 44 zugeordnet.

Anders ausgedrückt umfasst das künstliche neuronale Netzwerk 32 mehrere Teilnetzwerke, die Subnetzwerke, welche jeweils nur für einen Teilbereich des Blickfelds der Kamera "zuständig" sind.

Die Subnetzwerke können, wie oben erläutert, gemäß der Schritte T1 bis T7 trainiert werden, jedoch jeweils nur für den ihnen zugeordneten Koordinatenbereich der Koordinaten.

Dementsprechend wird beim Training des künstlichen neuronalen Netzwerks 32 nach dem Ermitteln der Koordinaten des lichtemittierenden Elements zunächst ermittelt, in welchem Koordinatenbereich sich das lichtemittierende Element 22 bzw. das Eingabegerät 12 befindet. Dies ist jedoch eine einfache Operation, die nur wenig Rechenzeit bzw. Rechenressourcen beansprucht.

Die ermittelten Koordinaten werden dann an die Input-Schicht des entsprechenden Subnetzwerks 44 übergeben und von diesem Subnetzwerk 44 verarbeitet.

Das Training der einzelnen Subnetzwerke kann dabei unabhängig voneinander erfolgen. In diesem Fall wird also für jedes der Subnetzwerke eine eigene Kostenfunktion ermittelt und wie oben beschrieben minimiert.

Dabei kann es jedoch dazu kommen, dass im Einsatz des künstlichen neuronalen Netzwerks 32 an den Rändern der Koordinatenbereiche Sprünge in der Position auftreten, die vom künstlichen neuronalen Netzwerk 32 ermittelt wird.

Dieses Problem wird dadurch gelöst, dass dann, wenn sich die ermittelten Koordinaten des lichtemittierenden Elements in einem vordefinierten Bereich um eine Koordinatenbereichsgrenze befinden, die Schritte T4 bis T7 zweimal ausgeführt werden, und zwar jeweils einmal mittels der beiden Subnetzwerke, die den benachbarten Koordinatenbereichen zugeordnet sind. Dies entspricht einer Durchführung der Schritte T4 bis T7 für zwei verschiedene Einteilungen der Koordinatenbereiche.

Eine Abweichung zwischen den ermittelten Positionen der beiden Subnetzwerke kann dann in die Kostenfunktion einfließen, sodass bei einer Minimierung der Kostenfunktion automatisch auch ein Springen der ermittelten Position im Bereich der Koordinatenbereichsgrenze vermindert oder sogar verhindert wird.

Das künstliche neuronale Netzwerk 32 kann durch das oben beschriebene Trainingsverfahren so trainiert werden, dass die reale Position des lichtemittierenden Elements 22 im Raum bzw. relativ zu den zumindest beiden Kameras 24 mit der durch das künstliche neuronale Netzwerk 32 ermittelte Position letztlich übereinstimmt. Mit anderen Worten kann das trainierte künstlich neuronale Netzwerk 32 von der Position zumindest eines beleuchteten Pixels auf den zumindest zwei Kamerasensoren auf die Position des lichtemittierenden Elements 22 bzw. des Eingabegeräts 12 im Raum schließen.

Vorzugsweise wird dabei für jede HMU, also für jede Empfangseinheit 16 ein eigenes, oben beschriebenes Trainingsverfahren durchgeführt.

Das künstliche neuronale Netzwerk 32 wird also speziell für das jeweilige Kamerasetup der jeweiligen HMU trainiert, sodass Abweichungen in den Bauteilen der HMU z.B. durch Fertigungstoleranzen, also beispielsweise Variationen des Abstands zwischen den Kameras 24 und/oder Variationen in der Lichtempfindlichkeit der Sensoren der Kameras 24 unerheblich sind, da das künstliche neuronale Netzwerk 32 speziell auf diese Konfiguration trainiert wird.

Anders ausgedrückt wird jede HMU mittels der Vorrichtung 33 einzeln kalibriert, indem das künstliche neuronale Netzwerk 32 für die Positionserkennung kalibriert wird. Insbesondere wird jede HMU am Ende der Herstellung, also "end of line" kalibriert.

Des Weiteren verfügt die Empfangseinheit 16 über mindestens zwei Buttons 26, 26', welche beispielsweise für das Starten des Pairings und das Ein- bzw. Ausschalten zuständig sind. Geladen wird die Empfangseinheit über Micro-USB, wobei diese einen Lithium-Ionen Akkumulator aufweisen kann.

Die Empfangseinheit 16 kann mit einem beliebigen Peripheriegerät über Bluetooth verbunden werden, wobei über diesen Informationskanal die Koordinaten des Eingabegeräts 12 relativ zur Empfangseinheit 16 übermittelt werden können. Außerdem weist die Empfangseinheit 16 selbst zumindest eine inertiale Messeinheit auf, wodurch die Ermittlung der Rotation des Eingabegeräts 12 relativ zur Empfangseinheit 16 ermittelt werden kann. Weiters kann die Beschleunigung besagter Geräte relativ zueinander ermittelt werden. Anhand dieser zusätzlichen Informationen können Störungen bei Trainingsereignissen gefiltert werden.

Es kann z.B. mit einer Frequenz von ca. 100 Hz die errechnete Position der Stiftspitze 20 bzw. Zeigespitze und der Zustand der Betätigungselemente an eine Bilderzeugungsvorrichtung übertragen werden. Die Datenübertragung erfolgt z.B. via WLAN mit Hilfe des UDP Protokolls, bevorzugt aber via Bluetooth.

**Patentansprüche**

1. Verfahren zum Trainieren eines künstlichen neuronalen Netzwerks (32) zur Positionsbestimmung eines Objekts, mit folgenden Schritten:

   i) Anfahren einer beliebigen Position im Arbeitsraum eines Roboters (34), wobei am Roboter (34) ein lichtemittierendes Element (22) angebracht ist;
   ii) Aufnehmen von zumindest zwei Bildern vom lichtemittierenden Element (22) mit zumindest zwei Kameras (24);
   iii) Ermitteln von Koordinaten des lichtemittierenden Elements (22), wobei Koordinaten der durch das lichtemittierende Element (22) beleuchteten Pixel der Sensoren der Kameras (24) ermittelt werden;
   iv) Verwenden der in Schritt iii) ermittelten Koordinaten als Inputparameter für die Input-Schicht des künstlichen neuronalen Netzwerks (32);
   wobei das Verfahren **dadurch gekennzeichnet ist, dass** die Sensoren der Kameras (24) jeweils in wenigstens zwei Koordinatenbereiche eingeteilt sind, wobei die ermittelten Koordinaten einem der Koordinatenbereiche zugewiesen werden, und
   wobei das künstliche neuronale Netzwerk (32) wenigstens zwei Subnetzwerke (44) aufweist, wobei den Koordinatenbereichen jeweils ein Subnetzwerk (44) zugeordnet ist.

2. Verfahren nach Anspruch 1, mit folgenden weiteren Schritten:

   v) Ermitteln einer Kostenfunktion; und
   vi) Extremieren, insbesondere Minimieren der Kostenfunktion.

3. Verfahren nach einem der vorhergehenden Ansprüche, wobei die Schritte i) bis iv), insbesondere die Schritte i) bis vi) für verschiedene beliebige Positionen im Arbeitsraum des Roboters (34) wiederholt werden.

4. Verfahren nach einem der vorhergehenden Ansprüche, wobei Gewichtungsfaktoren des künstlichen neuronalen Netzwerks (32) angepasst werden, um das künstliche neuronale Netzwerk (32) zu trainieren und/oder die Kostenfunktion zu extremieren.

5. Verfahren nach einem der vorhergehenden Ansprüche, wobei mittels des künstlichen neuronalen Netzes basierend auf den ermittelten Koordinaten des lichtemittierenden Elements (22) die Position des Objekts, insbesondere die Position des lichtemittierenden Elements (22) und/oder die Position einer Spitze (20) eines Eingabegerätes (12), ermittelt wird, insbesondere eine dreidimensionale räumliche Position des lichtemittierenden Elements (22) und/oder der Spitze (20).

6. Verfahren nach Anspruch 5, wobei beim Ermitteln der Position des Eingabegeräts (12) ein vordefinierter Anteil der Neuronen des künstlichen Neuronalen Netzwerks (32) ausgeschaltet wird.

7. Verfahren nach einem der vorhergehenden Ansprüche, wobei die Koordinatenbereiche paarweise disjunkt sind.

8. Verfahren nach einem der vorhergehenden Ansprüche, wobei die Schritte i) bis vi) für wenigstens zwei verschiedene Einteilungen der Koordinatenbereiche durchgeführt werden und/oder die Schritte i) bis vi) für jedes Subnetzwerk (44) getrennt durchgeführt werden, insbesondere eine separate Kostenfunktion für jedes Subnetzwerk (44) ermittelt und extremiert wird.

9. Verfahren zur Bestimmung einer Position eines Objekts (11), welches ein lichtemittierendes Element (22) enthält, mittels eines trainierten künstlichen neuronalen Netzwerks (32), mit folgenden Schritten:

i) Aufnehmen von jeweils zumindest einem Bild des lichtemittierenden Elements (22) mit zumindest zwei Kameras (24);
ii) Ermitteln von Koordinaten des lichtemittierenden Elements (22);
iii) Verwenden der in Schritt ii) ermittelten Koordinaten als Inputparameter für die Input-Schicht des künstlichen neuronalen Netzwerks;
iv) Ermitteln der Position des Objekts durch das künstliche neuronale Netzwerk, basierend auf den ermittelten Koordinaten des lichtemittierenden Elements (22);

**dadurch gekennzeichnet, dass** das künstliche neuronale Netzwerk (32) wenigstens zwei Subnetzwerke aufweist und dass Sensoren der Kameras jeweils in wenigstens zwei Koordinatenbereiche eingeteilt sind, die jeweils einem der Subnetzwerke zugeordnet sind, wobei die ermittelten Koordinaten einem der Koordinatenbereiche zugewiesen und dem entsprechenden Koordinatenbereich zugeordneten Subnetzwerk (44) zur weiteren Auswertung übergeben werden.

10. Vorrichtung zum Trainieren eines künstlichen neuronalen Netzwerks (32) zur Positionsbestimmung eines Objekts, **gekennzeichnet durch**

- ein Gerüst (38), wobei das Gerüst (38) einen im Wesentlichen horizontalen Abschnitt und einen im Wesentlichen vertikalen Abschnitt aufweist, wobei das Gerüst im Bereich des horizontalen Abschnitts einen Roboter (34) aufweist und im Bereich des vertikalen Abschnitts zumindest zwei Kameras (24) aufweist, wobei der Roboter (34) ein lichtemittierendes Element (22) aufweist, wobei die zumindest zwei Kameras (24) in der Weise positioniert sind, dass diese das lichtemittierende Element (22) erfassen können;
- eine Steuer- und/oder Regeleinrichtung (42), wobei die Steuer- und/oder Regeleinrichtung (42) eine Programmfolge abarbeitet, wobei die Programmfolge das beliebige Positionieren des lichtemittierenden Elementes (22) in einem definieren Bereich innerhalb des Arbeitsraums des Industrieroboters sowie die Aufnahme zumindest zweier Bilder des lichtemittierenden Elementes an der jeweiligen Position beinhaltet;

wobei die Steuer- und/oder Regeleinrichtung (42) dazu ausgebildet ist, die Vorrichtung (33) zum Trainieren des künstlichen neuronalen Netzwerks (32) dazu zu veranlassen, ein Verfahren nach einem der Ansprüche 1 bis 8 durchzuführen.

11. Vorrichtung nach Anspruch 10, wobei die Kameras (24) an einer Empfangseinheit (16) angebracht sind, insbesondere wobei die Empfangseinheit (16) eine Head-Mounted-Unit (HMU) ist, welche am Kopf eines Benutzers befestigbar ist.

12. System mit einer Empfangseinheit (16), umfassend wenigstens zwei Kameras (24), mit welchen lichtemittierende Elemente (22) erfassbar sind, und einem Steuergerät (30), die mit den Kameras (24) zur Signalübertragung verbunden sind,

wobei die Empfangseinheit (16) einen vorderen Bereich vor der Empfangseinheit (16) aufweist, wobei die Kameras (24) derart orientiert sind, dass ein Objekt im vorderen Bereich der Empfangseinheit (16) erfassbar ist, **dadurch gekennzeichnet, dass** das Steuergerät (30) ein künstliches neuronales Netzwerk (32) aufweist, das gemäß einem Verfahren nach einem der Ansprüche 1 bis 8 trainiert ist.

## Claims

1. A method of training an artificial neural network (32) for determining the position of an object, comprising the following steps:

(i) moving to an arbitrary position in the working space of a robot (34), the robot (34) having a light-emitting element (22) attached to it;
(ii) capturing at least two images of the light-emitting element (22) by means of at least two cameras (24);
(iii) determining coordinates of the light-emitting element (22), wherein coordinates of the pixels, illuminated by the light-emitting element (22), of the sensors of the cameras (24) are determined;

(iv) using the coordinates determined in step (iii) as input parameters for the input layer of the artificial neural network (32);
wherein the method is **characterized in that** the sensors of the cameras (24) are each grouped into at least two coordinate ranges, with the coordinates determined being assigned to one of the coordinate ranges, and wherein the artificial neural network (32) includes at least two subnetworks (44), with a respective subnetwork (44) being allocated to each of the coordinate ranges.

2. The method according to claim 1, comprising the following further steps:

   (v) determining a cost function; and
   (vi) extremizing, in particular minimizing, the cost function.

3. The method according to either of the preceding claims, wherein steps (i) to (iv), in particular steps (i) to (vi), are repeated for various arbitrary positions in the working space of the robot (34).

4. The method according to any of the preceding claims, wherein weighting factors of the artificial neural network (32) are adapted in order to train the artificial neural network (32) and/or to extremize the cost function.

5. The method according to any of the preceding claims, wherein the position of the object, in particular the position of the light-emitting element (22) and/or the position of a tip (20) of an input device (12), is determined by means of the artificial neural network based on the coordinates as determined of the light-emitting element (22), in particular a three-dimensional spatial position of the light-emitting element (22) and/or of the tip (20).

6. The method according to claim 5, wherein when the position of the input device (12) is determined, a predefined portion of the neurons of the artificial neural network (32) is turned off.

7. The method according to any of the preceding claims, wherein the coordinate ranges are pairwise disjoint.

8. The method according to any of the preceding claims, wherein steps (i) to (vi) are carried out for at least two different divisions of the coordinate ranges and/or steps (i) to (vi) are carried out separately for each subnetwork (44), in particular a separate cost function is determined and extremized for each subnetwork (44).

9. A method of determining, by means of a trained artificial neural network (32), a position of an object (11) which contains a light-emitting element (22), comprising the following steps:

   (i) capturing at least one respective image of the light-emitting element (22) by means of at least two cameras (24);
   (ii) determining coordinates of the light-emitting element (22);
   (iii) using the coordinates determined in step (ii) as input parameters for the input layer of the artificial neural network;
   (iv) determining the position of the object by the artificial neural network, based on the coordinates as determined of the light emitting element (22);

   **characterized in that** the artificial neural network (32) includes at least two subnetworks and **in that** sensors of the cameras are each grouped into at least two coordinate ranges which are each allocated to one of the subnetworks, wherein the coordinates determined are assigned to one of the coordinate ranges and are transferred to the subnetwork (44) allocated to the respective coordinate range for further evaluation.

10. A device for training an artificial neural network (32) for determining the position of an object, **characterized by**

   - a framework (38), the framework (38) having a substantially horizontal section and a substantially vertical section, the framework including a robot (34) in the area of the horizontal section and at least two cameras (24) in the area of the vertical section, the robot (34) including a light-emitting element (22), the at least two cameras (24) being positioned in such a way that they can detect the light-emitting element (22);
   - an open- and/or closed-loop control device (42), the open- and/or closed-loop control device (42) processing a program sequence, the program sequence including the arbitrary positioning of the light-emitting element (22) in a defined area within the working space of the industrial robot and the capturing of at least two images of the light-emitting element at the respective position;

wherein the open- and/or closed-loop control device (42) is configured to cause the device (33) for training the artificial neural network (32) to carry out a method according to any of claims 1 to 8.

11. The device according to claim 10, wherein the cameras (24) are attached to a receiving unit (16), in particular wherein the receiving unit (16) is a head-mounted unit (HMU) which is adapted to be fixed to the head of a user.

12. A system having a receiving unit (16), comprising at least two cameras (24) by means of which light-emitting elements (22) can be detected, and a control device (30), connected to the cameras (24) for signal transmission,

   wherein the receiving unit (16) has a front area in front of the receiving unit (16), the cameras (24) being oriented in such a way that an object in the front area of the receiving unit (16) can be detected, **characterized in that** the control device (30) includes an artificial neural network (32) which is trained in accordance with a method according to any of claims 1 to 8.

**Revendications**

1. Procédé d'entraînement d'un réseau neuronal artificiel (32) pour déterminer la position d'un objet, comprenant les étapes suivantes :

   i) déplacement vers une position arbitraire dans l'espace de travail d'un robot (34), un élément (22) émettant de la lumière étant monté sur le robot (34) ;
   ii) acquisition d'au moins deux images de l'élément (22) émettant de la lumière au moyen d'au moins deux caméras (24) ;
   iii) détermination des coordonnées de l'élément (22) émettant de la lumière, les coordonnées des pixels, éclairés par l'élément (22) émettant de la lumière, des capteurs des caméras (24) étant déterminées ;
   iv) utilisation des coordonnées déterminées à l'étape iii) comme paramètres d'entrée pour la couche d'entrée du réseau neuronal artificiel (32) ;
   le procédé étant **caractérisé en ce que** les capteurs des caméras (24) sont chacun regroupés en au moins deux plages de coordonnées, les coordonnées déterminées étant affectées à l'une des plages de coordonnées, et
   le réseau neuronal artificiel (32) comprend au moins deux sous-réseaux (44), un sous-réseau respectif (44) étant attribué à chacune des plages de coordonnées.

2. Procédé selon la revendication 1, comprenant en outre les étapes suivantes :

   v) détermination d'une fonction de coût ; et
   vi) extrémisation, en particulier minimisation, de la fonction de coût.

3. Procédé selon l'une des revendications précédentes, les étapes i) à iv), en particulier les étapes i) à vi), étant répétées pour diverses positions arbitraires dans l'espace de travail du robot (34).

4. Procédé selon l'une des revendications précédentes, des facteurs de pondération du réseau neuronal artificiel (32) étant adaptés de manière à entraîner le réseau neuronal artificiel (32) et/ou extrémiser la fonction de coût.

5. Procédé selon l'une des revendications précédentes, la position de l'objet, en particulier la position de l'élément (22) émettant de la lumière et/ou la position d'une pointe (20) d'un dispositif d'entrée (12), étant déterminée au moyen du réseau neuronal artificiel sur la base des coordonnées déterminées de l'élément (22) émettant de la lumière, en particulier une position spatiale tridimensionnelle de l'élément (22) émettant de la lumière et/ou de la pointe (20).

6. Procédé selon la revendication 5, une partie prédéfinie des neurones du réseau neuronal artificiel (32) étant désactivée lors de la détermination de la position du dispositif d'entrée (12).

7. Procédé selon l'une des revendications précédentes, les plages de coordonnées étant disjointes par paire.

8. Procédé selon l'une des revendications précédentes, les étapes i) à vi) étant réalisées pour au moins deux regroupements différents des plages de coordonnées et/ou les étapes i) à vi) étant réalisées séparément pour chaque sous-réseau (44), en particulier une fonction de coût distincte étant déterminée et extrémisée pour chaque sous-réseau (44).

9. Procédé de détermination, au moyen d'un réseau neuronal artificiel entraîné (32), de la position d'un objet (11) contenant un élément (22) émettant de la lumière, comprenant les étapes suivantes :

i) l'acquisition d'au moins une image respective de l'élément (22) émettant de la lumière au moyen d'au moins deux caméras (24) ;
ii) la détermination des coordonnées de l'élément (22) émettant de la lumière ;
iii) l'utilisation des coordonnées déterminées à l'étape ii) comme paramètres d'entrée pour la couche d'entrée du réseau neuronal artificiel ;
iv) la détermination de la position de l'objet par le réseau neuronal artificiel, sur la base des coordonnées déterminées de l'élément (22) émettant de la lumière ;

**caractérisé en ce que** le réseau neuronal artificiel (32) comprend au moins deux sous-réseaux et **en ce que** les capteurs des caméras sont chacun regroupés en au moins deux plages de coordonnées qui sont chacune attribuées à l'un des sous-réseaux, les coordonnées déterminées étant attribuées à l'une des plages de coordonnées et transférées au sous-réseau (44) attribué à la plage de coordonnées respective en vue d'une évaluation supplémentaire.

10. Dispositif d'entraînement d'un réseau neuronal artificiel (32) pour déterminer la position d'un objet, **caractérisé par**

- un cadre (38), le cadre (38) présentant un tronçon sensiblement horizontal et un tronçon sensiblement vertical, le cadre comprenant un robot (34) dans la zone du tronçon horizontal et au moins deux caméras (24) dans la zone du tronçon vertical, le robot (34) présentant un élément (22) émettant de la lumière, lesdites au moins deux caméras (24) étant positionnées de manière à pouvoir détecter l'élément (22) émettant de la lumière ;
- un moyen de commande en boucle ouverte et/ou fermée (42), le moyen de commande en boucle ouverte et/ou fermée (42) traitant une séquence de programme, la séquence de programme comprenant le positionnement arbitraire de l'élément (22) émettant de la lumière dans une zone définie au sein de l'espace de travail du robot industriel et l'acquisition d'au moins deux images de l'élément émettant de la lumière à la position respective ;

le moyen de commande en boucle ouverte et/ou fermée (42) étant réalisé de manière à amener le dispositif (33) d'entraînement du réseau neuronal artificiel (32) à mettre en oeuvre un procédé selon l'une des revendications 1 à 8.

11. Dispositif selon la revendication 10, les caméras (24) étant montées sur une unité de réception (16), en particulier l'unité de réception (16) étant une unité montée sur la tête (HMU) qui est apte à être fixée sur la tête d'un utilisateur.

12. Système comprenant une unité de réception (16), comprenant au moins deux caméras (24) au moyen desquelles des éléments (22) émettant de la lumière peuvent être détectés, et un dispositif de commande (30), reliés aux caméras (24) pour la transmission de signaux,

l'unité de réception (16) présentant une zone frontale devant l'unité de réception (16), les caméras (24) étant orientées de manière à pouvoir détecter un objet dans la zone frontale de l'unité de réception (16), **caractérisé en ce que** le dispositif de commande (30) comprend un réseau neuronal artificiel (32) qui est entraîné conformément à un procédé selon l'une des revendications 1 à 8.

**Fig. 1**

**Fig. 2**

# Fig. 3

# Fig. 4

*a)*

Bluetooth
Niedrig-Energie
WIFI

Spannungsquelle
3.3V

Ein-/Aus-
Schalter

Taster

CPU

Positionsermittlungs-
Vorrichtung
(2+)

Bewegungsermittlungs-
Vorrichtung

Ladevorrichtung für
Spannungsquelle

*b)*

Bluetooth
Niedrig-Energie

Spannungsquelle
3.3V

Ein-/Aus-
Schalter

Taster

CPU

Drahtloses
laden

IR
Emitter

Bewegungsermittlungs-
Vorrichtung

Ladevorrichtung für
Spannungsquelle

# Fig. 5

S1   S2   S3   S4

# Fig. 7

T1   T2   T3   T4   T5   T6   T7

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10124834 C2

**In der Beschreibung aufgeführte Nicht-Patentliteratur**

- Automatic construction of real-world datasets for 3D object localization using two cameras. *arXiv: 1707.02978v3,* 11. September 2018
- Deep Learning Advances in Computer Vision with 3D Data: A Survey. *ACM Comput. Surv.,* April 2017, vol. 50, 2
- A Survey on Deep Learning: Algorithms, Techniques, and Applications. *ACM Comput. Surv.,* September 2018, vol. 51, 5